# EUROPEAN PATENT APPLICATION

(11) **EP 2 159 314 A1**
(43) Date of publication of application: **03.03.2010**
(21) Application number: 08163011.3
(22) Date of filing: 26.08.2008
(51) Int. Cl.: D06F 37/30, F16H 55/48

(54) **Washing machine with a wash assembly comprising a pulley of improved geometrical design**

(71) Applicant: Electrolux Home Products Corporation N.V., 1930 Zaventem (BE)
(72) Inventor: Georgescu, Mihail, 33170 Pordenone (IT)
(74) Representative: Baumgartl, Gerhard Willi

(57) **Abstract**

A washing machine (6) having a casing (7); a drum (10); and a drive assembly (11) for driving the drum (10), and in turn having a pulley (12) connected to the drum (10), and a belt (16) looped about a drive shaft (15) and the pulley (12). The pulley (12) has a central hub (17) fitted centrally to the drum (10); an outer rim (18); and a number of arms (19) connecting the central hub (17) to the outer rim (18). And the end of each arm (19) has a fork (20) connected to the outer rim (18).

## Description

The present invention relates to a washing machine with a wash assembly comprising a pulley of improved geometrical design.

More specifically, the present invention relates to a washing machine of the type comprising a substantially parallelepiped-shaped casing housing a wash assembly, in turn comprising a cylindrical wash tub or chamber fixed inside the casing, directly facing a laundry loading-unloading opening; a cylindrical, perforated-wall laundry drum housed inside the wash tub; and a drive assembly for rotating the laundry drum about its axis of rotation.

The drive assembly typically comprises a pulley fitted to a pin projecting from the rear wall of the laundry drum; an electric motor with a drive shaft; and a drive belt looped about the drive shaft and the pulley to transmit rotation from the electric motor to the pulley and, therefore, the laundry drum.

The pulleys used in washing machines of the above type substantially comprise a central hub fitted to the laundry drum pin; an outer rim; and three spokes or straight arms connecting the hub to the outer rim.

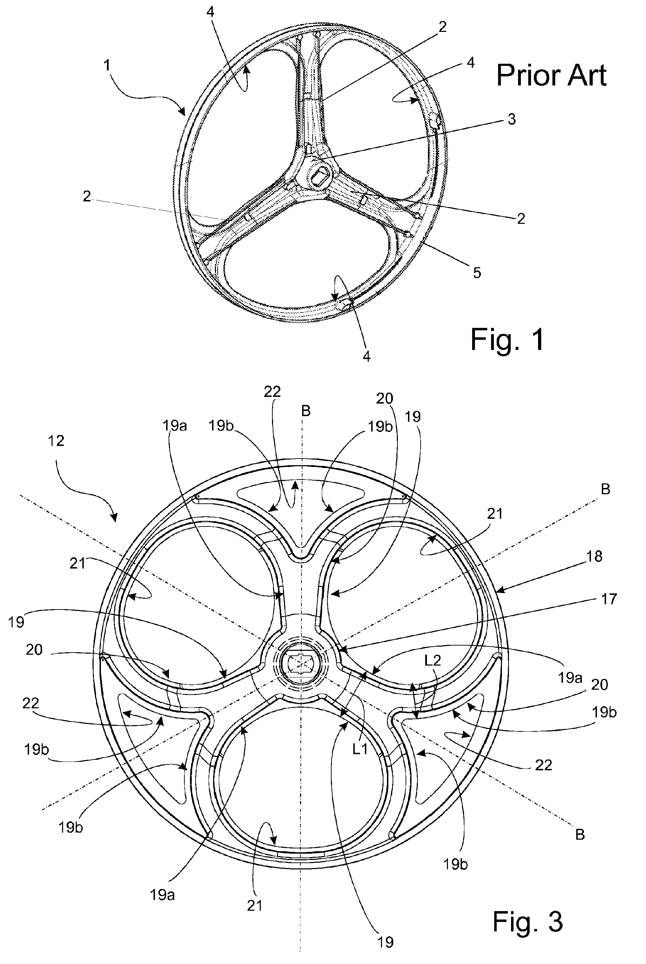

Figure 1 shows a known pulley 1, in which three arms 2 extend radially along respective axes from the hub 3 to the rim 5, and define three substantially triangular sectors 4.

A known design goal in the washing machine industry is the manufacture of lightweight pulleys of good mechanical characteristics and capable of withstanding structural deformation, to prevent accidental detachment of the drive belt from the outer rim.

Despite considerable effort over the past few years to achieve pulleys designed geometrically to meet the above requirements, results so far still leave considerable room for improvement.

It is an object of the present invention to provide a washing machine with a laundry drum drive assembly comprising a pulley designed geometrically to meet the above requirements.

According to the present invention, there is provided a washing machine laundry drum pulley as claimed in Claim 1 and preferably, though not necessarily, in any one of the Claims depending directly or indirectly on Claim 1.

According to the present invention, there is also provided a washing machine featuring a laundry drum drive assembly comprising a pulley, and as claimed in Claim 12.

A non-limiting embodiment of the present invention will be described by way of example with reference to the accompanying drawings, in which:
Figure 1 shows a view in perspective of a known washing machine drive assembly pulley in accordance with the known art;
Figure 2 shows a schematic of a washing machine with a laundry drum drive assembly comprising a pulley in accordance with the teachings of the present invention;
Figure 3 shows a front view of the Figure 2 pulley.

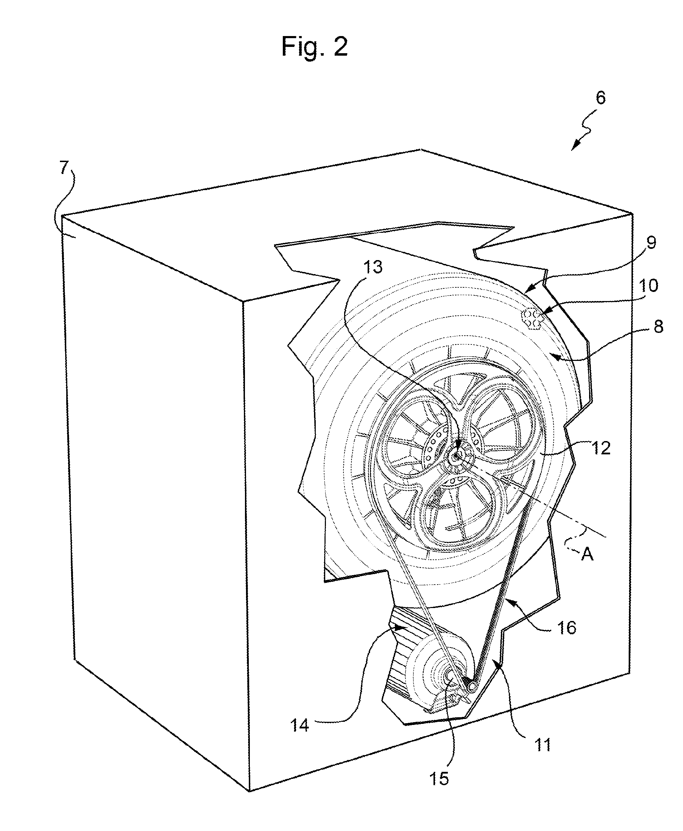

With reference to Figure 2, number 6 indicates as a whole a washing machine comprising a casing 7 housing a wash assembly 8, in turn comprising a cylindrical wash tub or chamber 9 fixed inside casing 7, directly facing a laundry loading-unloading opening (not shown); and a cylindrical, perforated-wall laundry drum 10 housed inside wash tub 9.

Washing machine 6 also comprises a drive assembly 11 for rotating laundry drum 10 about its axis of rotation A.

Drive assembly 11 comprises a pulley 12 fitted to a pin 13 projecting from the rear wall of laundry drum 10 and coaxial with axis A; an electric motor 14 with a drive shaft 15; and a drive belt 16 looped about drive shaft 15 of electric motor 14 and about pulley 12 to transmit rotation from electric motor 14 to pulley 12 and, therefore, to laundry drum 10.

With reference to Figure 3, pulley 12 comprises a central hub 17 fitted to pin 13 of laundry drum 10; an outer rim 18; and a number of angularly spaced spokes or arms 19 connecting central hub 17 to outer rim 18.

Unlike known pulleys, at least one arm 19 of pulley 12 has an end fork 20 connected to outer rim 18. More specifically, in the Figure 3 example, the outer end of each of arms 19 of pulley 12 has a fork 20 connected to outer rim 18.

More specifically, each arm 19 of pulley 12 comprises a main portion 19a extending from central hub 17 towards outer rim 18 along an axis B; and two secondary portions 19b, which extend from the end of main portion 19a opposite central hub 17, and diverge gradually up to outer rim 18.

More specifically, secondary portions 19b are shaped to form two arcs of a circle, which are opposite and specular with respect to axis B of arm 19, and extend up to outer rim 18 with a given radius of curvature so as to blend with the edge of outer rim 18.

More specifically, in the Figure 3 example, secondary portions 19b are sized so that each is of a width L1, measured crosswise to axis B of arm 19, substantially equal to half the width L2 of main portion 19a.

In the Figure 3 example, pulley 12 also comprises a number of substantially circular main openings or sectors 21 coplanar with pulley 12 and each bounded by the lateral edges of two adjacent arms 19, and by a portion of outer rim 18 extending between the two arms 19.

In the Figure 3 example, pulley 12 is made of materials with low mechanical characteristics, like resin or polymers with low quantity of glass fiber reinforcement.

In detail, the pulley 12 is made of a polymer material, for example polyamide PA6 or PA66 with 30-35% of glass fiber.

This kind of materials have also low density so they allow to take advantage of the geometry shape of the pulley 12. Thus, for a target mass of pulley 12 it is possible to use a higher volume.

Pulley 12 also comprises a number of secondary openings or sectors 22 coplanar with pulley 12, and each of which is substantially triangular and bounded by the lateral edges of two adjacent secondary portions 19b of the same arm 19, and by a portion of outer rim 18 extending between the two secondary portions 19b.

The pulley described has the advantage of being extremely lightweight, of excellent mechanical characteristics, and highly resistant to structural deformation by virtue of its geometrical design.

Clearly, changes may be made to the washing machine as described herein without, however, departing from the scope of the present invention as defined in the accompanying Claims.

## Claims

1. A pulley (12) for connection to a laundry drum (10) of a washing machine (6), said pulley (12) comprising a central hub (17) fixed centrally to said laundry drum (10); an outer rim (18); and a number of angularly spaced spokes or arms (19) connecting the central hub (17) to said outer rim (18); said pulley (12) being **characterized in that** the end of at least one arm (19) has a fork (20) connected to said outer rim (18).

2. A pulley as claimed in Claim 1, wherein the end of each arm (19) has a fork (20) connected to said outer rim (18).

3. A pulley as claimed in Claim 1 or 2, wherein said arm (19) comprises a main portion (19a) extending from the central hub (17) towards said outer rim (18) along an axis (B); and two secondary portions (19b) extending from the end of said main portion (19a) and diverging gradually up to said outer rim (18).

4. A pulley as claimed in Claim 3, wherein each secondary portion (19b) is shaped to form an arc of a circle.

5. A pulley as claimed in Claim 3 or 4, wherein said secondary portions (19b) of each arm (19) are shaped to form two arcs of a circle, which are opposite and specular with respect to said axis (B) of the relative arm (19).

6. A pulley as claimed in Claim 4 or 5, wherein said secondary portions (19b) extend up to the outer rim (18) with a given radius of curvature, so as to blend with the edge of the outer rim (18).

7. A pulley as claimed in any one of Claims 3 to 6, wherein said secondary portions (19b) are sized so that each is of a width (L1), measured crosswise to the axis (B) of said arm (19), substantially equal to half the width (L2) of the main portion (19a).

8. A pulley as claimed in any one of the foregoing Claims, and comprising a number of substantially circular main sectors (21), each bounded by the lateral edges of two adjacent arms (19), and by a portion of the outer rim (18) extending between the two arms (19).

9. A pulley as claimed in any one of Claims 3 to 8, and comprising a number of secondary sectors (22), each of which is substantially triangular and bounded by the lateral edges of two adjacent secondary portions (19b) of the same arm (19), and by a portion of the outer rim (18) extending between the two secondary portions (19b).

10. A pulley as claimed in any one of Claims 1 to 9, wherein the pulley (12) is made of resin and glass fiber reinforcement.

11. A pulley as claimed in any one of Claims 1 to 10, wherein the pulley (12) is made of a polymer material with 30-35% of glass fiber.

12. A washing machine (6) comprising a casing (7); a laundry drum (10) housed inside the casing (7) to rotate about an axis of rotation (A); and a drive assembly (11) for driving the drum (10), and in turn comprising a pulley (12) connected to said drum (10), an electric motor (14) for rotating a respective shaft (15), and a belt (16) looped about said shaft (15) and said pulley (12) to transmit rotation from said motor (14) to the drum (10); said washing machine (6) being **characterized in that** said pulley (12) is as claimed in any one of Claims 1 to 11.
